# EUROPEAN PATENT SPECIFICATION

(11) **EP 4 432 717 B1**
(45) Date of publication and mention of the grant of the patent: **06.05.2026**
(21) Application number: 21964074.5
(22) Date of filing: 11.11.2021
(51) Int. Cl.: H04W 16/26, H04W 48/20, H04W 84/00, H04B 7/155, H04W 24/08, H04W 64/00, H04W 84/06

(54) **COMMUNICATION CONTROL DEVICE, COMMUNICATION CONTROL METHOD, AND COMMUNICATION CONTROL PROGRAM**
KOMMUNIKATIONSSTEUERUNGSVORRICHTUNG, KOMMUNIKATIONSSTEUERUNGSVERFAHREN UND KOMMUNIKATIONSSTEUERUNGSPROGRAMM
DISPOSITIF DE COMMANDE DE COMMUNICATION, PROCÉDÉ DE COMMANDE DE COMMUNICATION, ET PROGRAMME DE COMMANDE DE COMMUNICATION

(43) Date of publication of application: 18.09.2024
(73) Proprietor: Rakuten Mobile, Inc., Tokyo 158-0094 (JP)
(72) Inventor: AOYAGI Kenichiro, Tokyo 158-0094 (JP)
(74) Representative: Betten & Resch
(86) International application number: PCT/JP2021/041638
(87) International publication number: WO 2023/084719

(56) References cited:
- WO-A1-2011/114839
- JP-A- 2015 154 357
- JP-A- 2019 036 994
- JP-A- 2020 202 371
- US-A1- 2015 195 757
- "3rd Generation Partnership Project; Technical Specification Group Services and System Aspects; Study on Vehicle-Mounted Relays; Stage 1 (Release 18)", 9 September 2021 (2021-09-09), XP052052497, Retrieved from the Internet <URL:https://ftp.3gpp.org/tsg_sa/TSG_SA/TSGS_93E_Electronic_2021_09/Docs/SP-211048.zip 22839-200.docx> [retrieved on 20210909]

## Description

### BACKGROUND OF THE INVENTION

### 1. Field of the Invention

The present disclosure relates to communication control technology in wireless communication system.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for portable communication devices such as smartphones and cell phones (hereinafter collectively referred to as "communication device(s)") are usually constructed by communication cells (hereinafter referred to as "terrestrial communication cell(s)") provided by base stations installed on the ground (hereinafter referred to as "terrestrial base station(s)"). However, mobile communication cannot be performed outside terrestrial communication cells, and the quality of mobile communications might be low depending on time and/or place even within terrestrial communication cells.

To solve the issues, relay stations may be used, which can communicate with terrestrial base stations to expand the terrestrial communication cells. A communication device in the vicinity of a relay station can communicate indirectly with the terrestrial base station via the relay station, even if it cannot communicate directly with the terrestrial base station. In other words, relay stations relay communication radio waves between terrestrial base stations and communication devices.

US2015195757A1 discloses to decide when and where to perform a handover of a mobile relay mounted on a train based on the mobility information (i.e. route) of the mobile relay.

"3rd Generation Partnership Project; Technical Specification Group Services and System Aspects; Study on Vehicle-Mounted Relays; Stage 1 (Release 18)",3GPP DRAFT; SP-211048, discloses that a 5G System shall be able to support mobile relay traffic load balancing across satellite and terrestrial access links, for mobile base station relays that use both NR satellite access and NR terrestrial access as relay link at the same time.

Patent Literature 1: JP-A-2006-352894

### SUMMARY OF THE INVENTION

Since most of the conventional relay stations are fixedly installed at a certain location on the ground, it was difficult to flexibly change the configuration of the wireless communication system. Then, it might be assumed to make the relay stations movable, but since the moving relay stations pass through many communication cells placed on the ground, there is a risk that communication cells with low need to be expanded might be expanded while communication cells with high need to be expanded might not be expanded.

The present disclosure was made in consideration of the situation, and the purpose is to provide a communication control apparatus and the like that enables a moving relay station to expand an appropriate communication The invention is set out in the annexed indepenent cell. claims, with further details defined in the dependent claims.

In order to solve the above issue, a communication control apparatus in a certain aspect of the present disclosure includes: a movement information acquisition unit that acquires movement information concerning the movement of a relay station that can communicate with a base station and expand the communication cell provided by the base station; an expansion cell selection unit that selects a communication cell to be expanded by the moving relay station based on the movement information; and a connection control unit that connects the relay station to the base station that provides the selected communication cell.

According to the aspect, the communication cell to be expanded is selected based on the movement information of the relay station, so that the moving relay station can expand the appropriate communication cell.

Another aspect of the present disclosure is a communication control method. The method includes: acquiring movement information concerning the movement of a relay station that can communicate with a base station and expand the communication cell provided by the base station; selecting a communication cell to be expanded by the moving relay station based on the movement information; and connecting the relay station to the base station that provides the selected communication cell.

In addition, any combination of the above components, and any conversion of the expression of the present disclosure among methods, devices, systems, recording media, computer programs, and the like, is also valid as a form of the present disclosure.

According to the present disclosure, a moving relay station can expand an appropriate communication cell.

### BRIEF DESCRIPTION OF THE DRAWINGS

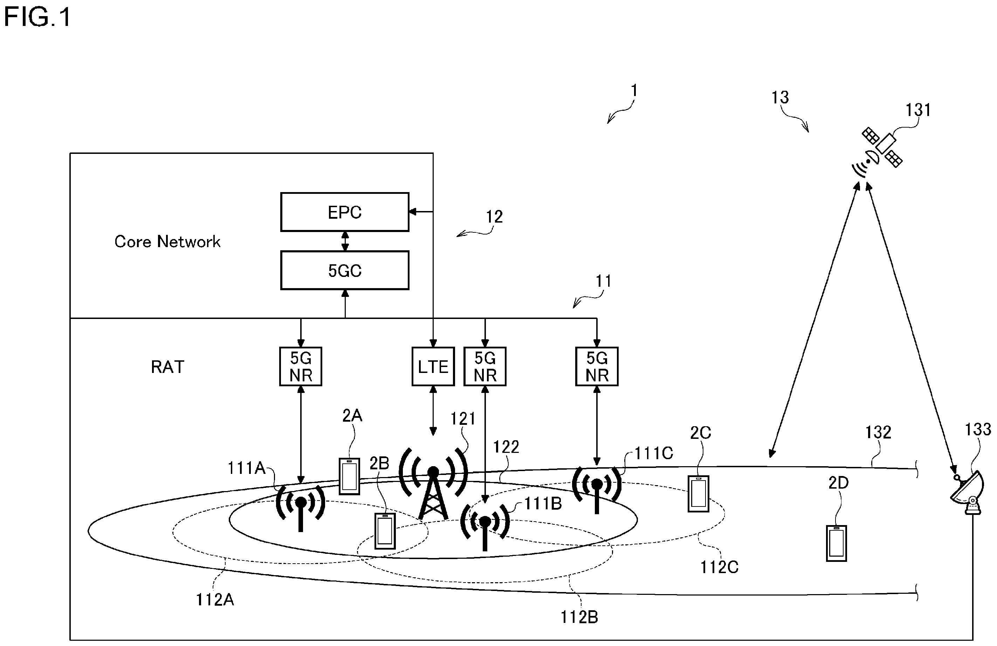

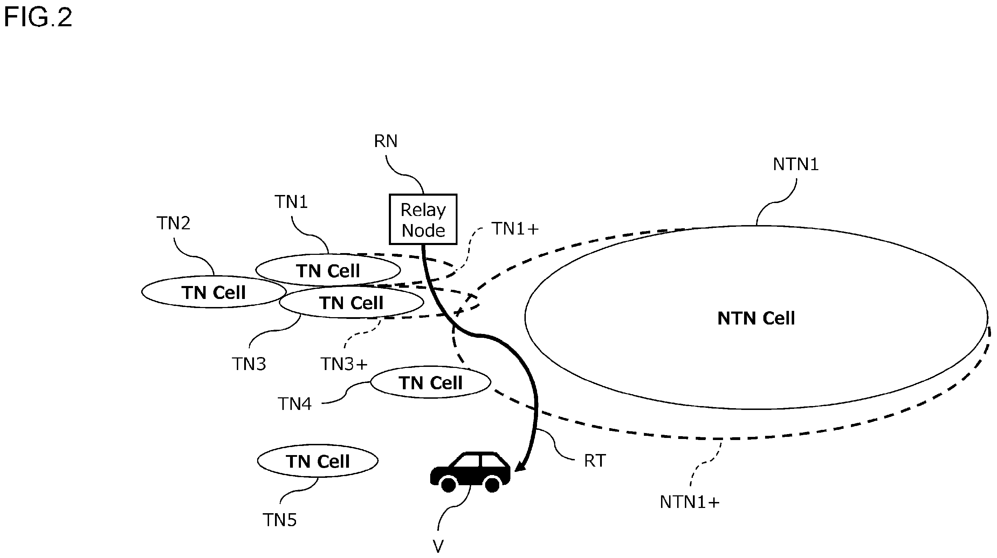

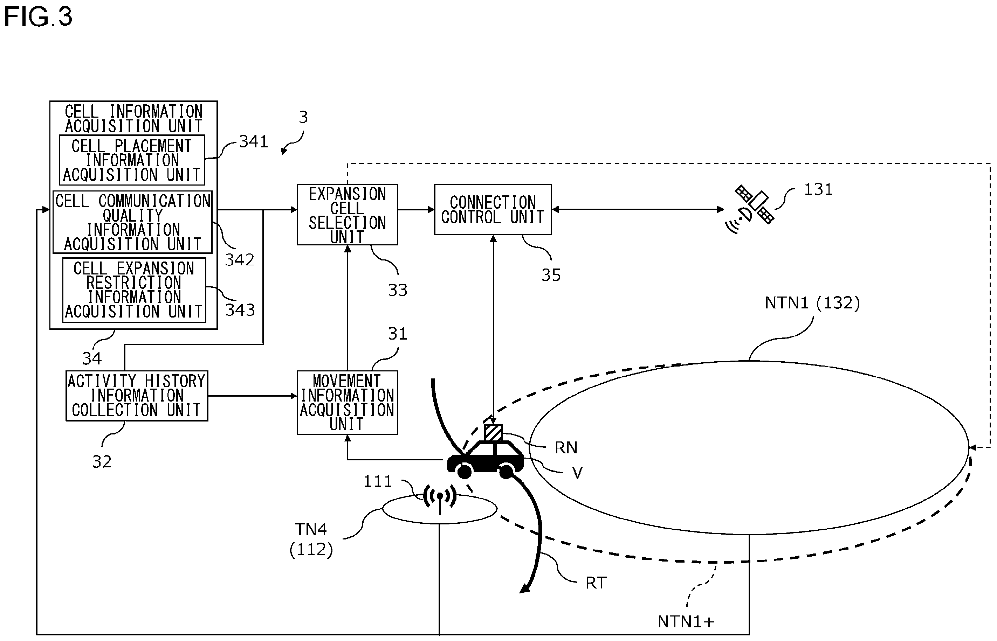

Figure 1 schematically shows the overview of a wireless communication system to which the communication control apparatus is applied. Figure 2 schematically shows the overview of the relay station control. Figure 3 is a functional block diagram of the communication control apparatus.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communication devices or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For the reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In such a manner, the gateway 133 connects the non-terrestrial network (NTN), which includes communication satellites 131 as a non-terrestrial base station or a satellite base station, and the terrestrial network TN, which includes terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In such a manner, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of approximately 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of approximately 500 km to 700 km above the ground as a flying non-terrestrial base station. However, a communication satellite flying in geostationary orbit or other higher orbit in outer space, or an unmanned or manned aircraft flying in stratosphere or other lower (e.g. approximately 20 km above the ground) atmosphere may be used as a non-terrestrial base station in addition to or instead of the communication satellite 131.

As described above, the wireless communication system 1 according to the present embodiment includes the terrestrial network (TN) 11, 12, capable of communicating with communication device 2 in the terrestrial communication cell 112, 122 provided on the ground by terrestrial base station 111, 121 installed on the ground, and the non-terrestrial network (NTN) 13, capable of communicating with communication device 2 in the non-terrestrial communication cell 132 provided on the ground by flying non-terrestrial base station 131. The communication control apparatus according to the present embodiment controls a movable relay station that expands any terrestrial communication cells and/or non-terrestrial communication cells in a wireless communication system 1 where the TN and the NTN coexist.

Figure 2 shows a schematic overview of relay station control according to the present embodiment. In the example, a relay station RN (Relay Node or Relay Station) is installed to an automobile or a vehicle V as a movable object. Other examples of movable objects include trains, motorcycles, bicycles, airplanes, ships, and any other vehicles, as well as moving people and/or objects, and the relay station RN may be attached to the movable objects. The moving objects may move along predetermined or arbitrary movement routes. In the example in Figure 2, a vehicle V with a relay station RN attached moves on the ground along an arbitrary movement route RT. On the ground, there are five terrestrial communication cells 112 and 122 provided by terrestrial base stations 111 and 121 (shown in Figure 2 as "TN Cell TN1" through "TN Cell TN5"), and one non-terrestrial communication cell 132 provided by non-terrestrial base station 131 (shown in Figure 2 as "NTN Cell NTN1").

The relay station RN can communicate with the terrestrial base stations 111, 121 and/or the non-terrestrial base station 131, and expand the terrestrial communication cells 112, 122 and/or the non-terrestrial communication cell 132 provided by the base stations. Here, "expansion of a communication cell" includes not only expanding the area covered by an existing communication cell, but also improving the communication quality of at least portion of an existing communication cell. Furthermore, "expansion of the area covered by a communication cell" includes not only expanding the area in the horizontal plane of an existing communication cell, but also expanding an existing communication cell vertically, e.g. underground or to the upper and/or lower floors of a building. There is also a known technology called IAB (Integrated Access and Backhaul), which uses backhaul between base stations to cause one base station to function as a relay station to another base station. The one base station in such a case may be used as a relay station RN according to the present embodiment. The relay station RN may be a communication device 2 that can function as a relay station, for example, a communication device 2 equipped with a so-called tethering function and/or personal hotspot function. When such a communication device 2, which usually functions as a wireless LAN access point, is used as a relay station RN, the RAT (e.g. 5G NR) used by the expanded base station (e.g. 5G base station 111) and the RAT used by the expanding relay station RN are different.

When a vehicle V to which a relay station RN is attached moves on the ground where many communication cells (TN1 to TN5, NTN1 and the like) exist, it is necessary to properly select one or more communication cells to be expanded by the moving relay station RN. In the example in Figure 2, a relay station RN moving along the movement route RT with a vehicle V, initially selects the first terrestrial communication cell TN1 as the expanded cell to provide the first terrestrial expansion cell TN1+, then selects the third terrestrial communication cell TN3 as the expanded cell to provide the third terrestrial expansion cell TN3+, and finally selects the first non-terrestrial communication cell NTN1 as the expanded cell to provide the first non-terrestrial expansion cell NTN1+.

A communication device 2 inside the first terrestrial expansion cell TN1+ (outside the first terrestrial communication cell TN1) can communicate indirectly via the relay station RN with the terrestrial base station 111 or 121 that provides the first terrestrial communication cell TN1. A communication device 2 inside the third terrestrial expansion cell TN3+ (outside the third terrestrial communication cell TN3) can communicate indirectly via the relay station RN with the terrestrial base station 111 or 121 that provides the third terrestrial communication cell TN3. A communication device 2 inside the first non-terrestrial expansion cell NTN1+ (outside the first non-terrestrial communication cell NTN1) can communicate indirectly via the relay station RN with the non-terrestrial base station 131 that provides the first non-terrestrial communication cell NTN1.

In the example in Figure 2, the second terrestrial communication cell TN2 and the fifth terrestrial communication cell TN5, which are far from the movement route RT of the vehicle V to which the relay station RN is attached, are not selected as target cells for expansion by the relay station RN. In addition, although the fourth terrestrial communication cell TN4 is in close proximity to the movement route RT, it is not selected as target cell for expansion by the relay station RN, because the first non-terrestrial communication cell NTN1 is preferentially selected as target cell for expansion by the relay station RN, which can provide the broader communication coverage (NTN1+) than that (potentially TN4+) expanded from the fourth terrestrial communication cell TN4.

As described above, the communication cell that should be expanded by the moving relay station RN attached to the vehicle V is selected according to the movement information of the vehicle V such as the movement route RT and/or the cell information such as the placement of multiple communication cells relative to the movement route RT.

Figure 3 is a functional block diagram of the communication control apparatus 3 of the present embodiment. The communication control apparatus 3 includes a movement information acquisition unit 31, an activity history information collection unit 32, an expansion cell selection unit 33, a cell information acquisition unit 34, and a connection control unit 35. The functional blocks are realized by the cooperation of hardware resources, such as the central processing unit, memory, input devices, output devices, and peripheral devices connected to the computer, and software that is executed using them. Regardless of the type of computer or the installation location, each of the above functional blocks may be realized with the hardware resources of a single computer, or by combining hardware resources distributed across multiple computers. Especially in the embodiment, some or all of functional blocks of the communication control apparatus 3 may be realized in a distributed or centralized manner by computer and/or processor provided in the relay station RN, the vehicle V, the communication device 2, the terrestrial base stations 111, 121, the non-terrestrial base station 131, the gateway 133, and the core network CN (all of these are shown as separate entities in Figure 3 for convenience).

The movement information acquisition unit 31 acquires movement information concerning the movement of the relay station RN installed to the vehicle V. The movement information includes at least one of the following: the movement route RT of the vehicle V and/or the relay station RN, the arrival time of the vehicle V and/or the relay station RN at each location on the movement route RT, the traffic condition on the movement route RT, the movement speed of the vehicle V and/or the relay station RN, the movement direction of the vehicle V and/or the relay station RN, and the current position of the vehicle V and/or the relay station RN. Some or all of the movement information can be acquired from the vehicle V and/or the relay station RN itself, the communication device 2 used by a person traveling in the vehicle V, a movement instruction device (not shown) that remotely gives movement instruction to the vehicle V and the like. For example, the movement route RT, the arrival time at each location on the movement route RT, and the traffic condition on the movement route RT can be obtained from map applications and/or navigation applications installed in the vehicle V, the relay station RN, the communication device 2, the movement instruction device and the like. In addition, the movement speed, the movement direction, and the current position can be obtained from a positioning module such as a GPS module installed in the vehicle V, the relay station RN, the communication device 2 and the like.

The movement information acquisition unit 31 may estimate some or all of the movement information of the relay station RN installed to the vehicle V based on the activity history information collected by the activity history information collection unit 32. The activity history information collection unit 32 collects activity history information of at least one of: one or more identified or unidentified communication devices 2 that can communicate directly without the relay station RN and/or indirectly via the relay station RN with the terrestrial base station 111, 121 and/or the non-terrestrial base station 131; the relay station RN and/or the vehicle V whose movement information is estimated; and other relay stations RN and/or vehicles V. The activity history information collected by the activity history information collection unit 32 is also used by the expansion cell selection unit 33 described below.

For example, the NWDAF (Network Data Analytics Function) and/or the LMF (Location Management Function) introduced in the 5GC as the core network CN of 5G can be used as the activity history information collection unit 32. The NWDAF is responsible for collecting and analyzing data on the network including 5G network. Specifically, the NWDAF collects and accumulates activity history information (including history information on the base station to which the communication device 2, the relay station RN, and/or the vehicle V were connected and the location of the communication device 2, the relay station RN, and/or the vehicle V) on various activities performed on the network by a number of communication devices 2, the relay stations RN, and/or the vehicles V connected to the network, and utilizes the analysis results for traffic control on the network, for example. The LMF manages the physical location of a number of communication devices 2, the relay stations RN, and/or the vehicles V on the network including 5G network. In other wireless communication systems, including those of later generations than 5G, functions similar to the NWDAF and/or the LMF might be provided under different names. Such similar functions may be used in the embodiment in place of or in addition to the NWDAF and/or the LMF.

Servers used by service providers that provide map services, navigation services, location tracking services and the like for a large number of communication devices 2, the relay stations RN, and/or the vehicles V connected to the network, can also be used as the activity history information collection unit 32. In the servers, the activity history information related to the various activities performed in connection with the services provided to the many communication devices 2, the relay stations RN, and/or the vehicles V connected to the network (including history information on the location of the communication device 2, the relay station RN, and/or the vehicle V) can also be collected.

From the NWDAF, the LMF, and/or the servers of service providers as the activity history information collection unit 32, statistical information regarding the activities on the network of an unspecified number of the communication devices 2, the relay stations RN, and/or the vehicles V connected to the network (including statistical information regarding the base stations to which they were connected) and/or historical information regarding their physical locations can be obtained. In the example in Figure 3, the movement information acquisition unit 31 and/or the expansion cell selection unit 33 obtains activity history information such as congestion and communication traffic during each time period, in the area between the fourth terrestrial communication cell TN4 and the first non-terrestrial communication cell NTN1 where the vehicle V is traveling through at the current time and/or in the where the vehicle V traveling on the movement route RT will arrive or travel through at a future time.

Based on the activity history information (including congestion information and/or traffic information on the network and/or physically) of the unspecified number of communication devices 2, relay stations RN, and/or vehicles V during each time period, the movement information acquisition unit 31 can accurately estimate the position and/or the movement of the relay station RN and/or the vehicle V, which are the target of communication control by the communication control apparatus 3, at the present or future time. Based on the activity history information, the expansion cell selection unit 33 can identify area where communication resources are insufficient despite high communication demand and the like, and select a communication cell (e.g. the first non-terrestrial communication cell NTN1) that can provide an expansion cell (e.g. the first non-terrestrial expansion cell NTN1+) that can effectively cover such an identified area as the cell to be expanded by the relay station RN.

For example, if the communication traffic amount and/or the number of communication devices 2, relay stations RN, and/or vehicles V were significantly high in the past in specific area among a plurality of areas where the relay station RN and/or the vehicle V are likely to be located in the present or future time period when the movement information acquisition unit 31 estimates the movement information of the relay station RN and/or the vehicle V, it can be estimated that the relay station RN and/or the vehicle V are highly likely to be located in such specific area. Similarly, if the communication traffic amount and/or the number of communication devices 2, relay stations RN, and/or vehicles V were significantly high in the past in specific communication cell among a plurality of communication cells (e.g. the fourth terrestrial communication cell TN4 and the first non-terrestrial communication cell NTN1) that can provide expansion cells by the relay station RN in the present or future time period when the expansion cell selection unit 33 selects a cell to be expanded by the relay station RN, such specific communication cell can be selected as a cell to be expanded.

From the NWDAF, the LMF, and/or the servers of service providers as the activity history information collection unit 32, statistical information regarding the activities on the network (including statistical information regarding the connected base stations) not only of an unspecified number of the communication devices 2, the relay stations RN, and/or the vehicles V but also of the relay station RN and/or the vehicle V themselves for the estimation and/or the communication control and/or historical information regarding their physical locations can be obtained. Based on the activity history information of the relay station RN and/or vehicle V themselves during each time period, the movement information acquisition unit 31 can accurately estimate the position and/or the movement of the relay station RN and/or the vehicle V at the present or future time, and the expansion cell selection unit 33 can select an appropriate cell to be expanded by referring to the history of communication cells expanded by the relay station RN in the past.

For example, if the relay station RN and/or the vehicle V were frequently located in a specific area in the present or future time period when the movement information acquisition unit 31 estimates the movement information of the relay station RN and/or the vehicle V, it can be estimated that the relay station RN and/or the vehicle V are highly likely to be located in such specific area. Similarly, if the relay station RN frequently expanded a specific communication cell in the present or future time period when the expansion cell selection unit 33 selects a cell to be expanded by the relay station RN, such specific communication cell can be preferentially selected as a cell to be expanded.

In addition to or instead of the activity history information on past days as described above, the movement information acquisition unit 31 and/or the expansion cell selection unit 33 may use the activity history information of the relay station RN and/or the vehicle V themselves immediately before (e.g. within one hour) estimating the movement information of the relay station RN and/or the vehicle V and/or selecting a cell to be expanded. For example, if the relay station RN and/or the vehicle V were moving in a specific area in a specific direction within 30 minutes before the movement information acquisition unit 31 estimates the movement information of the relay station RN and/or the vehicle V, it can be presumed that the relay station RN and/or the vehicle V are highly likely to be located in the specific area or the proximity area where they can move in 30 minutes toward the specific direction from the specific area. Similarly, if the relay station RN expanded a specific communication cell within 30 minutes before the expansion cell selection unit 33 selects a cell to be expanded by relay station RN, the specific communication cell can be preferentially selected as the cell to be expanded, as long as the relay station RN remains in the area where it can expand the specific communication cell.

The expansion cell selection unit 33 selects a communication cell to be expanded by the relay station RN moving with the vehicle V based on the movement information acquired by the movement information acquisition unit 31, the activity history information collected by the activity history information collection unit 32, the various cell information (cell placement information, cell communication quality information, and cell expansion restriction information) acquired by the cell information acquisition unit 34. The cell information acquisition unit 34 includes a cell placement information acquisition unit 341, a cell communication quality information acquisition unit 342, and a cell expansion restriction information acquisition unit 343.

The cell placement information acquisition unit 341 acquires cell placement information concerning the placement of one or more communication cells for selection by the expansion cell selection unit 33. The cell placement information acquisition unit 341 acquires, for example, the placement of the terrestrial communication cells TN1 through TN5 and the non-terrestrial communication cell NTN1 on the ground as shown in Figure 2, from each base station itself that provides each such communication cell and/or the core network CN which centrally manages the information on each such communication cell and the like. The cell placement information not only enables recognition of the center position of each communication cell and the shape and the size of the coverage area (communication range), but also enables recognition of the presence or absence of communication cells in each area on the ground, the types of communication cells (terrestrial communication cell or non-terrestrial communication cell), the density of communication cells, the continuity and/or overlap of communication cells, the distance from the center position and/or the edge of a communication cell and the like. The expansion cell selection unit 33 refers to the cell placement information together with other information (such as the movement information obtained by the movement information acquisition unit 31) to select a communication cell to be expanded by the relay station RN moving with the vehicle V.

In the upper area where the car or the vehicle V first passes in the example in Figure 2, the first terrestrial communication cell TN1 and the third terrestrial communication cell TN3 constitute a dense and continuous placement of communication cells. Then, when the relay station RN passes through the area together with the vehicle V, the expansion cell selection unit 33 selects the first terrestrial communication cell TN1 as the cell to be expanded by the relay station RN to provide the first terrestrial expansion cell TN1+ in the vicinity of the TN1, and selects the third terrestrial communication cell TN3 as the cell to be expanded by the relay station RN to provide the third terrestrial expansion cell TN3+ in the vicinity of the TN3.

After the relay station RN passes by the vicinity of the third terrestrial communication cell TN3, the density of the communication cells decreases and their continuity is lost. The candidate communication cells for the selection by the expansion cell selection unit 33 at this time are the fourth terrestrial communication cell TN4 and the first non-terrestrial communication cell NTN1. Typically, non-terrestrial communication cells are larger than terrestrial communication cells, therefore the area that can be expanded by the relay station RN is also larger. Thus, in such an area where the communication cells are not dense and not continuous, the expansion cell selection unit 33 preferentially selects the non-terrestrial communication cell (the first non-terrestrial communication cell NTN1) as the cell to be expanded that can provide a larger expansion cell (the first non-terrestrial expansion cell NTN1+), over the terrestrial communication cell (the fourth terrestrial communication cell TN4).

The cell communication quality information acquisition unit 342 acquires communication quality information (e.g. signal strength and communication delay) of one or more communication cells for selection by the expansion cell selection unit 33, from each base station itself that provides each communication cell, each communication device 2 in communication with each such base station (including communication device 2 that is measuring the communication quality of each such base station as a neighboring base station), and/or the core network CN which centrally manages the information on each such communication cell and the like. The expansion cell selection unit 33 refers to the cell communication quality information together with other information (such as the movement information obtained by the movement information acquisition unit 31) to select a communication cell to be expanded by the relay station RN moving with the vehicle V.

For example, if there are multiple candidate communication cells for expansion (the fourth terrestrial communication cell TN4 and the first non-terrestrial communication cell NTN 1 in Figure 3) on or near the movement route RT of the relay station RN and/or vehicle V as shown in Figure 3, the expansion cell selection unit 33 selects the communication cell (e.g. the first non-terrestrial communication cell NTN1) with higher (or lower) communication quality indicated by the cell communication quality information obtained by the cell communication quality information acquisition unit 342. The expansion cell selection unit 33 selects the cell to be expanded based on the communication quality normalized by the communication demand, which is recognized based on the activity history information collected by the activity history information collection unit 32. The expansion cell selection unit 33 preferentially selects a communication cell where communication resources are insufficient despite high communication demand, i.e. a communication cell with low communication quality normalized by the communication demand, as the cell to be expanded.

The cell expansion restriction information acquisition unit 343 acquires cell expansion restriction information concerning the expansion restriction of one or more communication cells for selection by the expansion cell selection unit 33, from each base station itself that provides each communication cell and/or the core network CN which centrally manages the information on each such communication cell and the like. When a relay station RN communicates with a base station to expand a communication cell, the communication resources of the base station will be used, therefore it would be likely that some base stations restrict the expansion of communication cells by a specific or unspecific relay station RN. Examples of the manner of restricting the expansion of communication cells include setting upper limits on the communication volume, the communication speed, the number of connected UEs and the like via the relay station RN, prohibiting the expansion of communication cells, and so on. The expansion restrictions may always be applied to the target communication cells, may be applied to the target communication cells depending on the time period or location, or may be applied to the target communication cells where there is no available communication resource while the communication volume, the communication speed, the number of connected UEs and the like of the target communication cells already exceed a certain level even without the relay station RN. When selecting an expansion cell from multiple candidate communication cells, the expansion cell selection unit 33 reduces the priority of the communication cell to which the expansion restriction is applied and preferentially selects the communication cell to which the expansion restriction is not applied.

The above are separate explanations of the various types of information that can be referenced when the expansion cell selection unit 33 selects a cell for expansion. In practice, the expansion cell selection unit 33 can holistically refer to and/or consider the pieces of information (the movement information acquired by the movement information acquisition unit 31, the activity history information collected by the activity history information collection unit 32, the cell placement information obtained by the cell placement information acquisition unit 341, the cell communication quality information obtained by the cell communication quality information acquisition unit 342, and/or the cell expansion restriction information obtained by the cell expansion restriction information acquisition unit 343), and select one or more cells to be expanded, which are recognized as optimal under certain decision criteria. For the purpose, the expansion cell selection unit 33 may be configured by artificial intelligence which has machine-learned comprehensive training data and/or learning data.

The connection control unit 35 connects the relay station RN to the base station that provides the communication cell selected by the expansion cell selection unit 33. In the example in Figure 3, the relay station RN is connected to the communication satellite 131 that provides the first non-terrestrial communication cell NTN1 selected by the expansion cell selection unit 33. The relay station RN connected to the communication satellite 131 provides the first non-terrestrial expansion cell NTN1+ that expands outside the first non-terrestrial communication cell NTN1.

The present disclosure has been described above based on embodiments. It is understood by those skilled in the art that the embodiments are exemplary and that various variations are possible in the combination of each component and each process thereof, and that such variations are also within the scope of the present disclosure.

The functional configuration of each device described in the embodiment can be realized by hardware resources or software resources, or by the cooperation of hardware resources and software resources. As hardware resources, processors, ROM, RAM, and other LSIs can be used. Operating systems, applications, and other programs can be used as software resources.

The present disclosure relates to communication control technology in wireless communication system.

1 wireless communication system, 2 communication device, 3 communication control apparatus, 11 5G wireless communication system, 12 4G wireless communication system, 13 Satellite communication system, 31 movement information acquisition unit, 32 activity history information collection unit, 33 expansion cell selection unit, 34 cell information acquisition unit, 35 connection control unit, 111 5G base station, 112 5G cell, 121 4G base station, 122 4G cell, 131 Communication satellite, 132 Satellite communication cell, 133 Gateway, 341 cell placement information acquisition unit, 342 cell communication quality information acquisition unit, 343 cell expansion restriction information acquisition unit.

## Claims

1. A communication control apparatus (3) comprising:
a movement information acquisition unit (31) configured to acquire movement information concerning the movement of a relay station (RN) that can communicate with a base station (111, 131) and expand the communication cell (112, 132) provided by the base station (111, 131);
a cell communication quality information acquisition unit (342) configured to acquire communication quality information of a communication cell (112, 132);
an activity history information collection unit (32) configured to collect activity history information of at least one of a communication device communicating with the base station (111, 131), the relay station (RN), and other relay stations, wherein
the movement information acquisition unit (31) is configured to estimate the movement information of the relay station (RN) based on the activity history information;
an expansion cell selection unit (33) configured to select a communication cell (112, 132) to be expanded by the moving relay station (RN) based on the movement information and the communication quality information, wherein the expansion cell selection unit (33) is configured to select a communication cell (112, 132) to be expanded based on the communication quality normalized by the communication demand where communication resources are insufficient despite high communication demand; and
a connection control unit (35) configured to connect the relay station (RN) to the base station (111, 131) that provides the selected communication cell (112, 132), wherein the communication demand is recognized based on the activity history information collected by the activity history information collection unit (32).

2. The communication control apparatus (3) according to claim 1, wherein the relay station (RN) is configured to be installed to a movable object.

3. The communication control apparatus (3) according to claim 1 or 2, wherein the movement information includes at least one of the following: the movement route of the relay station (RN), the arrival time of the relay station (RN) at each location on the movement route, the traffic condition on the movement route, the movement speed of the relay station (RN), the movement direction of the relay station (RN), and the current position of the relay station (RN).

4. The communication control apparatus (3) according to any of claims 1 to 3, further comprising a cell placement information acquisition unit (341) configured to acquire cell placement information concerning the placement of a plurality of communication cells, wherein
the expansion cell selection unit (33) is configured to select a communication cell (112, 132) to be expanded by the moving relay station (RN) based on the movement information and the cell placement information.

5. The communication control apparatus (3) according to any of claims 1 to 4, further comprising a cell expansion restriction information acquisition unit (343) configured to acquire cell expansion restriction information concerning the expansion restriction of a communication cell (112, 132), wherein
the expansion cell selection unit (33) is configured to select a communication cell (112, 132) to be expanded by the moving relay station (RN) based on the movement information and the cell expansion restriction information.

6. The communication control apparatus (3) according to any of claims 1 to 5, wherein the communication cells include a terrestrial communication cell provided on the ground by a terrestrial base station installed on the ground, and a non-terrestrial communication cell provided on the ground by a flying non-terrestrial base station.

7. The communication control apparatus (3) according to claim 6, wherein the non-terrestrial base station is a communication satellite flying in outer space.

8. A communication control method comprising:
Acquiring, by a movement information acquisition unit (31), movement information concerning the movement of a relay station (RN) that can communicate with a base station (111, 131) and expand the communication cell (112, 132) provided by the base station (111, 131);
acquiring communication quality information of a communication cell (112, 132) by a cell communication quality information acquisition unit (342);
collecting, by an activity history information collection unit (32), activity history information of at least one of a communication device communicating with the base station (111, 131), the relay station (RN), and other relay stations, wherein
the movement information of the relay station (RN) based on the activity history information is estimated by the movement information acquisition unit (32),
selecting a communication cell (112, 132) to be expanded by the moving relay station (RN) based on the movement information and the communication quality information, wherein a communication cell (112, 132) to be expanded is selected by an expansion cell selection unit (33), based on the communication quality normalized by the communication demand where communication resources are insufficient despite high communication demand, wherein the communication demand is recognized based on the activity history information collected by the activity history information collection unit (32);
and
connecting the relay station (RN) to the base station (111, 131) that provides the selected communication cell (112, 132).

9. A communication control program causing a computer to perform the communication control method according to claim 8.

## Patentansprüche

1. Kommunikationssteuervorrichtung (3), umfassend:
eine Bewegungsinformationserfassungseinheit (31), die konfiguriert ist, Bewegungsinformationen bezüglich der Bewegung einer Relaisstation (RN) zu erfassen, die mit einer Basisstation (111, 131) kommunizieren und die von der Basisstation (111, 131) bereitgestellte Kommunikationszelle (112, 132) erweitern kann;
eine Zellenkommunikationsqualitätsinformations-Erfassungseinheit (342), die konfiguriert ist, Kommunikationsqualitätsinformationen einer Kommunikationszelle (112, 132) zu erfassen;
eine Aktivitätshistorieninformations-Sammeleinheit (32), die konfiguriert ist, Aktivitätshistorieninformationen von mindestens einem von einem mit der Basisstation (111, 131) kommunizierenden Kommunikationsgerät, der Relaisstation (RN) und anderen Relaisstationen zu sammeln, wobei die Bewegungsinformationserfassungseinheit (31) konfiguriert ist, die Bewegungsinformationen der Relaisstation (RN) basierend auf den Aktivitätshistorieninformationen zu schätzen;
eine Erweiterungszellenauswahleinheit (33), die konfiguriert ist, basierend auf den Bewegungsinformationen und den Kommunikationsqualitätsinformationen eine durch die sich bewegende Relaisstation (RN) zu erweiternde Kommunikationszelle (112, 132) auszuwählen, wobei die Erweiterungszellenauswahleinheit (33) konfiguriert ist, eine zu erweiternde Kommunikationszelle (112, 132) basierend auf der durch den Kommunikationsbedarf normierten Kommunikationsqualität dort auszuwählen, wo Kommunikationsressourcen trotz hohem Kommunikationsbedarf unzureichend sind; und
eine Verbindungssteuereinheit (35), die konfiguriert ist, die Relaisstation (RN) mit der Basisstation (111, 131) zu verbinden, die die ausgewählte Kommunikationszelle (112, 132) bereitstellt, wobei der Kommunikationsbedarf basierend auf den durch die Aktivitätshistorieninformations-Sammeleinheit (32) gesammelten Aktivitätshistorieninformationen erkannt wird.

2. Kommunikationssteuervorrichtung (3) nach Anspruch 1, wobei die Relaisstation (RN) konfiguriert ist, an einem beweglichen Objekt installiert zu werden.

3. Kommunikationssteuervorrichtung (3) nach Anspruch 1 oder 2, wobei die Bewegungsinformationen mindestens eines der folgenden umfassen: die Bewegungsroute der Relaisstation (RN), die Ankunftszeit der Relaisstation (RN) an jedem Ort auf der Bewegungsroute, die Verkehrsbedingungen auf der Bewegungsroute, die Bewegungsgeschwindigkeit der Relaisstation (RN), die Bewegungsrichtung der Relaisstation (RN) und die aktuelle Position der Relaisstation (RN).

4. Kommunikationssteuervorrichtung (3) nach einem der Ansprüche 1 bis 3, ferner umfassend eine Zellenplatzierungsinformations-Erfassungseinheit (341), die konfiguriert ist, Zellenplatzierungsinformationen bezüglich der Platzierung einer Vielzahl von Kommunikationszellen zu erfassen, wobei
die Erweiterungszellenauswahleinheit (33) konfiguriert ist, basierend auf den Bewegungsinformationen und den Zellenplatzierungsinformationen eine durch die sich bewegende Relaisstation (RN) zu erweiternde Kommunikationszelle (112, 132) auszuwählen.

5. Kommunikationssteuervorrichtung (3) nach einem der Ansprüche 1 bis 4, ferner umfassend eine Zellenerweiterungseinschränkungsinformations-Erfassungseinheit (343), die konfiguriert ist, Zellenerweiterungseinschränkungsinformationen bezüglich der Erweiterungseinschränkung einer Kommunikationszelle (112, 132) zu erfassen, wobei
die Erweiterungszellenauswahleinheit (33) konfiguriert ist, basierend auf den Bewegungsinformationen und den Zellenerweiterungseinschränkungsinformationen eine durch die sich bewegende Relaisstation (RN) zu erweiternde Kommunikationszelle (112, 132) auszuwählen.

6. Kommunikationssteuervorrichtung (3) nach einem der Ansprüche 1 bis 5, wobei die Kommunikationszellen eine terrestrische Kommunikationszelle, die auf dem Boden durch eine auf dem Boden installierte terrestrische Basisstation bereitgestellt wird, und eine nicht-terrestrische Kommunikationszelle, die auf dem Boden durch eine fliegende nicht-terrestrische Basisstation bereitgestellt wird, umfassen.

7. Kommunikationssteuervorrichtung (3) nach Anspruch 6, wobei die nicht-terrestrische Basisstation ein im Weltraum fliegender Kommunikationssatellit ist.

8. Kommunikationssteuerverfahren, umfassend:
Erfassen, durch eine Bewegungsinformationserfassungseinheit (31), von Bewegungsinformationen bezüglich der Bewegung einer Relaisstation (RN), die mit einer Basisstation (111, 131) kommunizieren und die von der Basisstation (111, 131) bereitgestellte Kommunikationszelle (112, 132) erweitern kann;
Erfassen von Kommunikationsqualitätsinformationen einer Kommunikationszelle (112, 132) durch eine Zellenkommunikationsqualitätsinformations-Erfassungseinheit (342);
Sammeln, durch eine Aktivitätshistorieninformations-Sammeleinheit (32), von Aktivitätshistorieninformationen von mindestens einem von einem mit der Basisstation (111, 131) kommunizierenden Kommunikationsgerät, der Relaisstation (RN) und anderen Relaisstationen, wobei die Bewegungsinformationen der Relaisstation (RN) basierend auf den Aktivitätshistorieninformationen durch die Bewegungsinformationserfassungseinheit (32) geschätzt werden;
Auswählen einer durch die sich bewegende Relaisstation (RN) zu erweiternden Kommunikationszelle (112, 132) basierend auf den Bewegungsinformationen und den Kommunikationsqualitätsinformationen, wobei eine zu erweiternde Kommunikationszelle (112, 132) durch eine Erweiterungszellenauswahleinheit (33) ausgewählt wird basierend auf der durch den Kommunikationsbedarf normierten Kommunikationsqualität dort, wo Kommunikationsressourcen trotz hohem Kommunikationsbedarf unzureichend sind, wobei der Kommunikationsbedarf basierend auf den durch die Aktivitätshistorieninformations-Sammeleinheit (32) gesammelten Aktivitätshistorieninformationen erkannt wird; und
Verbinden der Relaisstation (RN) mit der Basisstation (111, 131), die die ausgewählte Kommunikationszelle (112, 132) bereitstellt.

9. Kommunikationssteuerprogramm, das einen Computer veranlasst, das Kommunikationssteuerverfahren nach Anspruch 8 auszuführen.

## Revendications

1. Appareil de commande de communication (3) comprenant :
une unité d'acquisition d'informations de mouvement (31) configurée pour acquérir des informations de mouvement concernant le mouvement d'une station relais (RN) qui peut communiquer avec une station de base (111, 131) et étendre la cellule de communication (112, 132) offerte par la station de base (111, 131) ;
une unité d'acquisition d'informations de qualité de communication de cellule (342) configurée pour acquérir des informations de qualité de communication d'une cellule de communication (112, 132) ;
une unité de collecte d'informations d'historique d'activité (32) configurée pour collecter des informations d'historique d'activité d'au moins l'un parmi un dispositif de communication communiquant avec la station de base (111, 131), la station relais (RN) et d'autres stations relais, dans lequel
l'unité d'acquisition d'informations de mouvement (31) est configurée pour estimer les informations de mouvement de la station relais (RN) sur la base des informations d'historique d'activité ;
une unité de sélection de cellule d'extension (33) configurée pour sélectionner une cellule de communication (112, 132) à étendre par la station relais mobile (RN) sur la base des informations de mouvement et des informations de qualité de communication, dans lequel l'unité de sélection de cellule d'extension (33) est configurée pour sélectionner une cellule de communication (112, 132) à étendre sur la base de la qualité de communication normalisée par la demande de communication où les ressources de communication sont insuffisantes malgré une demande de communication élevée ; et
une unité de commande de connexion (35) configurée pour connecter la station relais (RN) à la station de base (111, 131) qui offre la cellule de communication sélectionnée (112, 132), dans lequel la demande de communication est reconnue sur la base des informations d'historique d'activité collectées par l'unité de collecte d'informations d'historique d'activité (32).

2. Appareil de commande de communication (3) selon la revendication 1, dans lequel la station relais (RN) est configurée pour être installée sur un objet mobile.

3. Appareil de commande de communication (3) selon la revendication 1 ou 2, dans lequel les informations de mouvement comportent au moins l'un parmi les éléments suivants : l'itinéraire de mouvement de la station relais (RN), l'heure d'arrivée de la station relais (RN) à chaque emplacement sur l'itinéraire de mouvement, l'état de trafic sur l'itinéraire de mouvement, la vitesse de mouvement de la station relais (RN), la direction de mouvement de la station relais (RN), et la position actuelle de la station relais (RN).

4. Appareil de commande de communication (3) selon l'une des revendications 1 à 3, comprenant en outre une unité d'acquisition d'informations de placement de cellule (341) configurée pour acquérir des informations de placement de cellule concernant le placement d'une pluralité de cellules de communication, dans lequel
l'unité de sélection de cellule d'extension (33) est configurée pour sélectionner une cellule de communication (112, 132) à étendre par la station relais mobile (RN) sur la base des informations de mouvement et des informations de placement de cellule.

5. Appareil de commande de communication (3) selon l'une des revendications 1 à 4, comprenant en outre une unité d'acquisition d'informations de restriction d'extension de cellule (343) configurée pour acquérir des informations de restriction d'extension de cellule concernant la restriction d'extension d'une cellule de communication (112, 132), dans lequel
l'unité de sélection de cellule d'extension (33) est configurée pour sélectionner une cellule de communication (112, 132) à étendre par la station relais mobile (RN) sur la base des informations de mouvement et des informations de restriction d'extension de cellule.

6. Appareil de commande de communication (3) selon l'une des revendications 1 à 5, dans lequel les cellules de communication comportent une cellule de communication terrestre offerte sur le sol par une station de base terrestre installée sur le sol, et une cellule de communication non-terrestre offerte sur le sol par une station de base non-terrestre volante.

7. Appareil de commande de communication (3) selon la revendication 6, dans lequel la station de base non-terrestre est un satellite de communication volant dans l'espace extérieur.

8. Procédé de commande de communication comprenant :
l'acquisition, par une unité d'acquisition d'informations de mouvement (31), d'informations de mouvement concernant le mouvement d'une station relais (RN) qui peut communiquer avec une station de base (111, 131) et étendre la cellule de communication (112, 132) offerte par la station de base (111, 131) ;
l'acquisition d'informations de qualité de communication d'une cellule de communication (112, 132) par une unité d'acquisition d'informations de qualité de communication de cellule (342) ;
la collecte, par une unité de collecte d'informations d'historique d'activité (32), d'informations d'historique d'activité d'au moins l'un parmi un dispositif de communication communiquant avec la station de base (111, 131), la station relais (RN), et d'autres stations relais, dans lequel
les informations de mouvement de la station relais (RN) sur la base des informations d'historique d'activité sont estimées par l'unité d'acquisition d'informations de mouvement (32),
la sélection d'une cellule de communication (112, 132) à étendre par la station relais mobile (RN) sur la base des informations de mouvement et des informations de qualité de communication, dans lequel une cellule de communication (112, 132) à étendre est sélectionnée par une unité de sélection de cellule d'extension (33), sur la base de la qualité de communication normalisée par la demande de communication où les ressources de communication sont insuffisantes malgré une demande de communication élevée, dans lequel la demande de communication est reconnue sur la base des informations d'historique d'activité collectées par l'unité de collecte d'informations d'historique d'activité (32) ; et
la connexion de la station relais (RN) à la station de base (111, 131) qui offre la cellule de communication sélectionnée (112, 132).

9. Programme de commande de communication amenant un ordinateur à effectuer le procédé de commande de communication selon la revendication 8.
